# EUROPEAN PATENT APPLICATION

(11) **EP 2 179 815 A1**
(43) Date of publication of application: **28.04.2010**
(21) Application number: 08828494.8
(22) Date of filing: 18.08.2008
(51) Int. Cl.: B23K 35/26, C22C 12/00, C22C 13/00

(54) **BONDING COMPOSITION**

(30) Priority: 24.08.2007 JP 2007218897
(71) Applicant: Kabushiki Kaisha Toshiba, Minato-ku Tokyo 105-8001 (JP)
(72) Inventor: LONG, Than Trong, Tokyo 105-8001 (JP); HISAZATO, Yuuji, Tokyo 105-8001 (JP)
(74) Representative: Maury, Richard Philip
(86) International application number: PCT/JP2008/002226
(87) International publication number: WO 2009/028147

(57) **Abstract**

A bonding composition (12) contains 0.01-1 wt% of Ge and 0.01 to 1 wt% of Si, and a balance of a Sn alloy. The bonding composition (12) has excellent bonding strength.

## Description

### Technical Field

The present invention relates to a bonding composition expelling in bonding strength and bonding reliability.

### Background Art

For example, the bonding composition plays a significant role for mechanical and electrical connection of plural component parts, which are used under severe environments involving a heat cycle, a mechanical impact, mechanical vibrations, etc., of a substrate for power control computers, home electric appliances, personal computers and others. Component members which are bonded by this bonding composition are demanded to have improved mechanical strength such as bonding strength and thermal fatigue strength and also an improved physical property such as wettability.

As a bonding composition, a solder is generally used in a melted state, so that a large amount of oxide might be produced by its reaction with oxygen contained in air or in the melted solder. Therefore, there is caused a problem that mechanical strength lowers. To solve the problem, for example, JP-A 11-226776 (KOKAI) and JP-A 2000-343273 (KOKAI) disclose a technology of adding germanium (Ge) to prevent oxidation (see, for example, Patent References 1 and 2).

According to references (e.g., "Comparison of Erosion by Soldering to Cu and Stainless Steels in Various Kinds of LeadfreeSolder" Shoichi SUENAGA, et. al., Micro Joining Committee, MATE 2004 Program 4-5, and "Dissolution of electroless Ni-metallization by lead free solder alloys" Ahmed Sharif, et.al, Journal of alloys and compounds, 388 (2005)), when a conventional Sn alloy based bonding composition is used to bond an iron based material, a Ni based material, an Fe-Ni based material or another Ni-plated metal material, such as a Cu based material, an A1 based material or a Mg based material, a coarse intermetallic compound such as Sn(Fe), Sn(Ni) or Sn(Fe, Ni) might be formed on the bonding interface at an early stage because Sn, iron and Ni have a fast reaction velocity.

As described above, when the conventional Sn alloy based bonding composition was used for bonding, the coarse intermetallic compound was formed on the bonding interface, causing problems that bonding strength was lowered by embrittlement and a crack was generated by cooling. And, various types of production facilities using the above bonding composition had problems that iron was eluted by a contact reaction between the melted Sn based alloy composition and iron based equipment to decrease the life time of the equipment or to change the make-up of the alloy composition.
Patent Reference 1: JP-A 11-226776 (KOKAI)
Patent Reference 2: JP-A 2000-343273 (KOKAI)
Nonpatent Reference 1: "Comparison of Erosion by Soldering to Cu and Stainless Steels in Various Kinds of LeadfreeSolder" Shoichi SUENAGA, et al., Micro Joining Committee, MATE 2004 Program 4-5
Nonpatent Reference 2: "Dissolution of electroless Ni-metallization by lead free solder alloys" Ahmed Sharif et al., Journal of alloys and compounds, 388 (2005)

### Disclosure of the Invention

The object of the present invention is to provide a bonding composition excelling in bonding strength and having high reliability.

According to an aspect of the present invention, there is provided a bonding composition comprising 0.01 to 1 wt% of Ge, 0.01 to 1 wt% of Si, and a balance of Sn or a Sn alloy.

According to another aspect of the present invention, there is provided the bonding composition, wherein 0.01 to 1 wt% of Co is further contained.

According to another aspect of the present invention, there is provided the bonding composition, wherein 0.01 to 1 wt% of Ti is further contained.

### Brief Description of Drawings

[FIG. 1] FIG. 1 is a perspective view showing a bonded state of bonded members by using the bonding composition according to the present invention.
[FIG. 2] FIG. 2 is a diagram schematically showing the results of the observation and analysis of the bonding interface between a bonded member and a bonding composition of a shear specimen in Example 1.
[FIG. 3] FIG. 3 is a diagram schematically showing the results of the observation and analysis of the bonding interface between a bonded member and a bonding composition of a shear specimen in Comparative Example 1.
[FIG. 4] FIG. 4 is a diagram schematically showing the results of the observation and analysis of the bonding interface between a bonded member and a bonding composition of a shear specimen in Example 2.
[FIG. 5] FIG. 5 is a diagram schematically showing the results of the observation and analysis of the bonding interface between a bonded member and a bonding composition of a shear specimen in Comparative Example 2.
[FTG. 6A] FIG. 6A is a diagram showing a sectional view of a shear specimen having caused brittle fracture on the side of one of the bonded members.
[FIG. 6B] FIG. 6B is a diagram showing a sectional view of a shear specimen having caused brittle fracture on the side of the other of the bonded members.
[FIG. 7] FIG. 7 is a diagram schematically showing the results of the observation and analysis of the bonding interface between a bonded member and a bonding composition of a shear specimen in Comparative Example 3.

### Explanation of Numerals

10, 11... bonded member, 12... bonding composition, 20... first reaction layer, 21... second reaction layer.

### Best Mode for Carrying out the Invention

The bonding composition according to embodiments of the present invention will be described below in detail with reference to the drawings.

The bonding composition according to an embodiment of the present invention contains 0.01 to 1 wt% of Ge (germanium) and 0.01 to 1 wt% of Si (silicon), and a balance of Sn (tin) or a Sn alloy.

Since Ge and Si form a total solid solution, when Ge and Si are contained and the bonded members to be bonded are made of an iron based material, a Ni based material, an Fe-Ni based material or a Ni-plated metallic material, Ge and Si form an intermetallic compound such as Sn(Fe, Ge, Si), Sn(Ni, Ge, Si) or Sn(Fe, Ni, Ge, Si) on bonding interfaces between the bonded members and the bonding composition. The formation of the above intermetallic compound suppresses the growth of the intermetallic compound such as Sn(Fe), Sn(Ni) or Sn(Fe, Ni) which becomes a cause of lowering the bonding strength due to embrittlement and generating a crack when cooling.

When Si is contained without containing Ge, the effect of suppressing the growth of the intermetallic compound such as Sn(Fe), Sn(Ni) or Sn(kFe, Ni) cannot be obtained because it is hard for Si to form an intermetallic compound together with Sn, Fe or Ni.

Here, the Ge content is determined to be 0.01 to 1 wt% because if the Ge content is smaller than 0.01 wt%, the effect of suppressing the growth of the intermetallic compound such as Sn(Fe), Sn(Ni) or Sn(Fe, Ni) becomes low. Meanwhile, if the Ge content is larger than 1 wt%, it may be bonded with the metal element contained in the bonding composition to form the coarse intermetallic compound, and the strength of the bonding composition is degraded.

The Si content is determined to be 0.01 to 1 wt% because if the Si content is smaller than 0.01 wt%, the effect of suppressing the growth of the intermetallic compound such as Sn(Fe), Sn(Ni) or Sn(Fe, Ni) becomes low. Meanwhile, if the Si content is larger than 1 wt%, it may be bonded with the metal element contained in the bonding composition to form the coarse intermetallic compound, and the strength of the bonding composition is degraded.

The Sn alloy is composed of a known alloy containing Sn and is appropriately selected depending on temperature conditions and the like when members are bonded by using the bonding composition. Examples of the Sn alloy to be used include Sn alloys of Sn-Cu base, Sn-Ag base, Sn-Ag-Cu base, Sn-Ag-Cu-Bi base, Sn-Ag-Bi-In base, Sn-Zn base, Sn-Bi base, Sn-Sb base, Sn-In base and Sn-Pb base. Here, by containing Cu (copper) and Ag (silver) into Sn, the mechanical strength such as bonding strength, thermal fatigue strength, etc. of the bonded members which are bonded by using the bonding composition is improved. And, the melting point of the bonding composition is adjusted by containing Bi (bismuth), In (indium) or Sb (antimony) into the Sn alloy, and the mechanical strength such as bonding strength and thermal fatigue strength and the physical property such as wettability of the bonded members bonded by using the bonding composition are improved. The above Sn alloys are described below. The following Sn alloys are typical examples and not exclusive. The contents in the following compositions are indicated in wt% unless otherwise specified.

### (1) Sn-Cu base

For Sn-Cu base, a Sn alloy such as Sn-0.75Cu is used. This 0.75Cu provides a eutectic (eutectic temperature of 227°C) of Sn and a Sn-Cu intermetallic compound. This Sn alloy is used to configure, for example, a high-melting point bonding composition.

### (2) Sn-Ag base

For Sn-Ag base, a Sn alloy such as Sn-3.5Ag is used. This 3.5Ag provides a eutectic (eutectic temperature of 221°C) of Sn and a Sn(Ag) intermetallic compound. This Sn alloy is used to configure, for example, a high-melting point bonding composition and has excellent mechanical strength.

### (3) Sn-Ag-Cu base

In the Su-Ag-Cu base, low Ag base is configured to have a small content of expensive Ag and contains, for example, about 1 wt% of Ag. Examples of the low Ag based Sn alloy include Sn-0.7Ag-0.3Cu (melting point of 217 to 227°C), Sn-1.2Ag-0.8Cu (melting point or 218 to 222°C), etc.

In the Sn-Ag-Cu base, high Ag base has bonding strength higher than that of the low Ag base, and examples of the high Ag base include a Sn-Ag-Cu base ternary eutectic such as Sn-4.7Ag-1.7Cu (eutectic temperature of 217°C), Sn-3.5Ag-0.9Cu (eutectic temperature of 217°C), Sn-3.2Ag-0.6Cu (eutectic temperature of 217°C), etc. In addition to the above eutectic compositions, examples of the high Ag based Sn alloy include Sn-3.8Ag-0.7Cu (melting point of 217 to 220°C), Sn-4Ag-0.5Cu (melting point of 217 to 225°C), etc.

### (4) Sn-Ag-Cu-Hi base

This Sn-Ag-Cu-Bi base has Bi in a range of not more than 3 wt% added to the Su-Ag-Cu base in order to improve wettability and to lower a reflow temperature. Examples of the Sn-Ag-Cu-Bi based Sn alloy include Sn-2.5Ag-0.5Cu-1Bi (melting point of 214 to 221°C), Sn-2Ag-0.5Cu-2Bi (melting point of 211 to 221°C), etc.

### (5) Sn-Ag-Bi-In base

Since addition of In lowers the melting point and improves the wettability, the Sn-Ag-Bi-In based Sn alloy is added with a relatively large amount of In in comparison with the added amount of Bi to reduce formation of a brittle Bi segregation phase. Examples of the Sn-Ag-Bi-In based Sn alloy include Sn-3.5Ag-2.5Bi-2.51In (melting point of 190 to 210°C), Sn-3.5Ag-3Bi-6In (melting point of 165 to 206°C), Sn-3.5Ag-0.5Bi-8In (melting point of 170 to 206°C), etc.

### (6) Sn-Zn base

For Sn-Zn base, a Sn-9Zn eutectic (eutectic temperature of 199°C) is used. This Sn-Zn based alloy has a low melting point and good mechanical properties, and it is economical. The Zn content is preferably 1 to 10 wt%. This range is preferable because if the Zn content is larger than 10 wt% getting out of the range for the eutectic composition, a coarse Zn primary crystal is crystallized and the bonding strength lowers. Zn is easily oxidized because it is active, and if its content increases, wettability lowers. Meanwhile, if the Zn content is smaller than 1 wt%, sufficient bonding strength cannot be obtained.

Bi may be contained in order to lower a melting starting temperature and to improve wettability. When it is contained together with Zn, the Bi content is preferably in a range of 1 to 10 wt%. This Bi content is preferable because if it is smaller than 1 wt%, sufficient effects of improving strength and wettability cannot be obtained, and if it is larger than 10 wt%, embrittlement might be caused by formation of a brittle Bi segregation phase. Examples of the Bi-containing Sn-Zn based Sn alloy include Sn-8Zn-3Bi (melting point of 187 to 199°C) etc.

### (7) Sn-Bi base

A Sn-Bi based Sn alloy has a low melting point, and as the Sn-Bi based Sn alloy, eutectic composition of Sn-58Bi (eutectic temperature of 139°C) shows good mechanical properties. The Bi content is preferably in a range of 1 to 60 wt%. This range is preferable because if the Bi content is larger than 60 wt% getting out of the range for the eutectic composition, a coarse and brittle Bi primary crystal is crystallized and embrittlement might be caused. Meanwhile, if the Bi content is smaller than 1 wt%, sufficient bonding strength cannot be obtained.

1 to 10 wt% of Zn may be contained into the Sn-Bi based Sn alloy in order to improve the bonding strength. In this case, when the Bi content is in a range of 1 to 10 wt%, a sufficient effect can be obtained. And, the Sn-Bi based Sn alloy may contain Ag of 0.5 to 3.5 wt% in order to improve the bonding strength.

### (8) Sn-Sb base

A Sn-Sb based Sn alloy has excellent mechanical strength, and examples of the Sn-Sb based Sn alloy include Sn-5Sb (melting point of 236 to 240°C), Sn-9Sb (melting point of 246°C), etc. The Sn-Sb based Sn alloy preferably has the Sb content in a range of I to 10 wt%. This range is preferable because if the Sb content is smaller than 1 wt%, sufficient bonding strength cannot be obtained, and if it is larger than 10 wt%, a coarse Zn primary crystal is crystallized, and the bonding strength lowers.

### (9) Sn-In base

A Sn-In based Sn alloy has a low melting point, and examples of the Sn-In based Sn alloy include a eutectic composition Sn-52In (melting point of 117°C) having a low melting point and showing good mechanical properties. Indium (In) is easily oxidized because it is active, and if its content increases, bonding and mounting in the atmosphere become difficult. When the In content is larger than the eutectic composition 52 wt%, coarse crystallized phase appears, and bonding strength lowers. Meanwhile, the In content is suppressed to a small amount from an economical viewpoint. For example, 1 to 10 wt% of Zn may be contained in the Sn-In based Sn alloy having 1 to 10 wt% of In to improve bonding strength. 0.5 to 3.5 wt% of Ag and 0.5 to 0.75 wt% of Cu may also be contained in the Sn-In based Sn alloy to improve the bonding strength.

### (10) Sn-Pb base

For a Sn-Pb based Sn alloy, a eutectic composition Sn-37Fb (eutectic temperature of 183°C) showing good mechanical properties and wettability is generally used. Examples of high-melting point solder include Sn-98Pb (316 to 322°C), Sn-90Pb (268 to 301°C), etc. In this Sn-Pb based Sn alloy, it is preferable to have the Pb content in a range of 5 to 98 wt%. This range is preferable because if the Pb content is smaller than 5 wt%, sufficient bonding strength and wettability cannot be obtained, and if it it larger than 98 wt%, hardness lowers, and sufficient wettability cannot be obtained.

As described above, the Sn alloy contained in the bonding composition according to the invention is selectable in a large range, and the bonding composition applicable to various usages can be configured.

According to the bonding composition of the present invention, for example, when the bonded member is formed of an iron based material, a Ni based material, an Fe-Ni based material or a Ni-plated metallic material and Ge and Si are contained, an intermetallic compound such as Sn(Fe, Ge, Si), Sn(Ni, Ge, Si) or Sn(Fe, Ni, Ge, Si) is formed in the bonding interface between the bonded member and the bonding composition, and an intermetallic compound such as Sn(Fe), Sn(Ni) or Sn(Fe, Ni) leading to the reduction of mechanical strength can be suppressed from growing. Specifically, the reaction between the bonded member and the Sn or Sn alloy is suppressed, and the intermetallic compound such as Sn(Fe), Sn(Ni) or Sn(Fe, Ni) can be suppressed from growing on the bonding interface.

0.01 to 1 wt% of Co (cobalt) may also be contained in the above-described bonding composition which contains 0.01 to 1 wt% of Ce, 0.01 to 1 wt% of Si and the balance of Sn (tin) or a Sn alloy. The Co content of the above range is preferable because if the Co content is smaller than 0.01 wt%, the effect of suppressing the growth of the intermetallic compound such as Sn(Fe), Sn(Ni) or Sn(Fe, Ni) is low. And, if the Co content is larger than 1 wt%, it is bonded with another metal element to form a coarse intermetallic compound, possibly resulting in the degradation of strength.

By containing Co as described above, in case where the bonded member is formed of an iron based material, a Ni based material, an Fe-Ni based material or a Ni-plated metallic material, an intermetallic compound such as Sn(Fe, Ge, Si, Co), Sn(Ni, Ge, Si, Co) or Sn(Fe, Ni, Ge, Si, Co) is formed on the bonding interface between the bonded member and the bonding composition, and the intermetallic compound such as Sn(Fe), Sn(Ni) or Sn(Fe, Ni), which leads to the degradation of mechanical strength, can be suppressed from growing.

And, 0.01 to 1 wt% of Ti (titanium) may be further contained in the above-described bonding composition which contains 0.01 to 1 wt% of Ge, 0.01 to 1 wt% of Si and the balance of Sn (tin) or a Sn alloy. The Ti content of the above range is preferable because if the Ti content is smaller than 0.01 wt%, the effect of suppressing the growth of the intermetallic compound of Sn(Fe), Sn(Ni) or Sn(Fe, Ni) is small. And, if the Ti content is larger than 1 wt%, it is bonded with another metal element to form a coarse intermetallic compound, possibly resulting in degrading the strength. Ti of the above range may be added to the above-described Co-added bonding composition.

By containing Ti as described above, in case where the bonded member is formed of an iron based material, a Ni based material, an Fe-Ni based material or a Ni-plated metallic material, an intermetallic compound such as Sn(Fe, Ge, Si, Ti), Sn(Ni, Ge, Si, Ti) or Sn(Fe, Ni, Ge, Si, Ti) is formed on the bonding interface between the bonded member and the bonding composition, and the intermetallic compound such as Sn(Fe), Sn(Ni) or Sn(Fe, Ni), which leads to the degradation of mechanical strength, can be suppressed from growing.

The present invention is not limited to the embodiments described above but can be materialized with the component elements modified in a practical phase within the scope of technical idea of the present invention. And, various inventions can be made by appropriately combining the plural component elements described in the above embodiments. For example, some component elements may be deleted from all the component elements described in the embodiments. In addition, the component elements which are used in different embodiments may be combined appropriately.

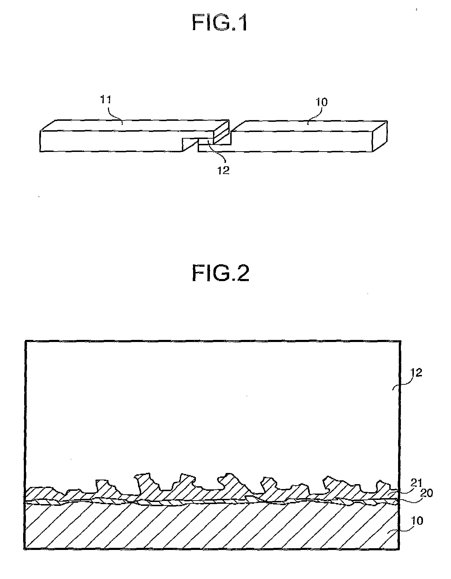

It is described in the following Examples and Comparative Examples that the bonding composition according to the present invention has excellent bonding strength when it is used to bond the bonded members. FIG. 1 is a perspective view showing a bonded state of the bonded members by using the bonding composition according to the present invention.

### (Example 1)

According to the test method for lead-free solders of Japanese Industrial Standards "JIS Z 3198-5", a bonding composition 12 having a thickness of 100 µm and made of Sn-0.1wt%Ge-0.1wt%Si was inserted between the joint portions of two bonded members 10 and 11 made of an iron based material (SS400) as shown in FIG. 1, a flux was dripped, and they were heated in a nitrogen atmosphere at a temperature of 250°C for 90 seconds to bond the bonded members 10 and 11. The bonded members 10 and 11 bonded by the bonding composition 12 were used to produce shear specimen No. 1 of "JIS Z 3198-5".

The bonding interfaces between the bonded members 10 and 11 and the bonding composition 12 of the shear specimen were observed and analyzed by a scanning electron microscope (SEM) and an X-ray microanalyzer (EPMA: electron probe micro-analysis). The X-ray microanalyzer is a device that can examine the specimen shape, the kinds and amounts of elements contained in the specimen surface and their distributed states by iradiating a very narrow electron beam to the specimen surface and measuring a wavelength and strength of characteristic X-ray generated from the pertinent portion and the amounts of secondary electrons and reflected electrons. The above-described shear specimen was subjected to the shear test under a condition of a tensile rate of 1 mm/min.

FIG. 2 is a diagram schematically showing the results of the observation and analysis of the bonding interfaces between the bonded members 10 and 11 and the bonding composition 12 of the shear specimen. FIG. 2 shows the bonding interface on the side of the bonded member 10, but the bonding interface on the side of the bonded member 11 had the similar result as that of the bonding interface on the side of the bonded member 10.

As shown in FIG. 2, the bonded member 10, a first reaction layer 20 having a thickness of about 1 µm and made of an intermetallic compound of Sn(Fe, Ge, Si), and a second reaction layer 21 having a thickness of 5 to 7 µm and made of an intermetallic compound of Sn(Fe) were stacked in this order and observed. The first reaction layer 20 was formed to cover the entire surface of the bonded member 10.

The shear test result shows that the bonded portion has shear strength of 23 MPa. And, the shear fracture has occurred within the bonding composition 12.

### (Comparative Example 1)

The shear specimen used in Comparative Example 1 has the same structure as that of the shear specimen used in Example 1 except that Sn-0.2 wt%Ge was used as the bonding composition 12.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1.

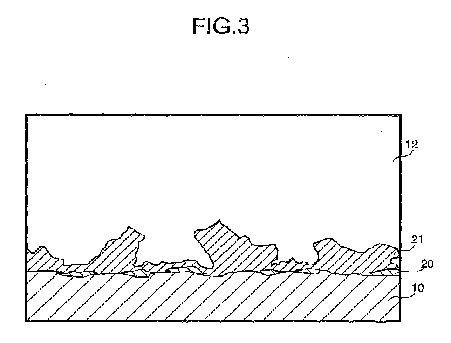

FIG. 3 is a diagram schematically showing the results of the observation and analysis of the bonding interfaces between the bonded members 10 and 11 and the bonding composition 12 of the shear specimen. FIG. 3 shows the bonding interface on the side of the bonded member 10, but the bonding interface on the side of the bonded member 11 had the similar result as that of the bonding interface on the side of the bonded member 10.

As shown in FIG. 3, the bonded member 10, a first reaction layer 20 which has an intermetallic compound of Sn(Fe, Ge) having a thickness of about 1 µm scattered on the surface of the bonded member 10, and a second reaction layer 21 which has an intermetallic compound of Sn(Fe) having a thickness of 7 to 10 µm stacked on the first reaction layer 20 or the bonded member 10 were stacked in this order and observed.

The shear test result shows that the bonded portion has shear strength of 20 MPa. And, the shear fracture has occurred along the interface between the bonding composition 12 and the second reaction layer 21. Fracture within the second reaction layer 21 was also observed locally.

### (Review of results in Example 1 and Comparative Example 1)

It was found from the results in Example 1 and Comparative Example 1 that when the bonding composition containing Ge and Si is used as in Example 1, both Ge and Si are diffused to the bonding interfaces between the bonded members 10 and 11 and the bonding composition 12, and the first reaction layer 20 made of the intermetallic compound of Sn(Fe, Ge, Si) is formed on the entire surface of the bonded member 10. Thus, it was found that Fe constituting the bonded members 10 and 11 is prevented from dispersing toward the bonding composition 12, and the second reaction layer 21 which is stacked on the first reaction layer 20 is suppressed from growing.

It was found from the results of the shear test that the suppression of the growth of the second reaction layer 21 avoids the formation of the interface between the intermetallic compound of coarse Sn(Fe) and the bonding composition 12 and brittle fracture within the second reaction layer 21 and generates shear fracture within the bonding composition 12. Thus, it became apparent that the bonding composition has excellent bonding strength.

It was also found that when the bonding composition 12 is composed of a Sn alloy of Sn-Ge containing Ge alone as in Comparative Example 1, the intermetallic compound of Sn(Fe, Ge) is scattered on the surface of the bonded member 10, and a sufficient effect of suppressing the growth of the intermetallic compound of Sn(Fe) which is the second reaction layer 21 cannot be obtained.

### (Example 2)

The shear specimen used in Example 2 has the same structure as that of the shear specimen used in Example 1 except that Sn-0.7wt%/Cu-0.05wt%Ge-0.05wt%Si was used as the bonding composition 12.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1.

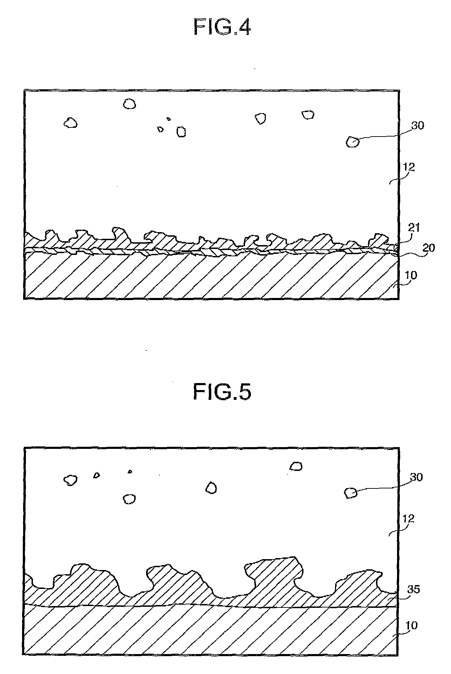

FIG. 4 is a diagram schematically showing the results of the observation and analysis of the bonding interfaces between the bonded members 10 and 11 and the bonding composition 12 of the shear specimen. FIG. 4 shows the bonding interface on the side of the bonded member 10, but the bonding interface on the side of the bonded member 11 had the similar result as that of the bonding interface on the side of the bonded member 10.

As shown in FIG. 4, the bonded member 10, a first reaction layer 20 having a thickness of about 1 µm and composed of an intermetallic compound of Sn(Fe, Ge, Si), and a second reaction layer 21 having a thickness of 5 to 7 µm and composed of an intermetallic compound of Sn(Fe) were stacked in this order and observed. The first reaction layer 20 was formed to cover the entire surface of the bonded member 10. No Cu was observed in the reaction layers 20 and 21 of 2he bonding interface, and a eutectic structure of Sn and η phase (Cu₆Sn₅) and crystallization (reference numeral 30 in FIG. 4) of local η phase (Cu₆Sn₅) were observed within the bonding composition 12.

The shear test result shows that the bonded portion has shear strength of 30 MPa. And, the shear fracture has occurred within the bonding composition 12.

### (Example 3)

The shear specimen used in Example 3 had the same structure as that of the shear specimen used in Example 1 except that Sn-3.5wt%Ag-0.05wt%Ge-0.05wt%Si was used as the bonding composition 12.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 3 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions ofpeaks and troughs configuring the irregular shape of the second reaction layer 21 and the distribution of crystallisation indicated by 30 in the drawing are different.

As an analyzed result, the bonded member 10, the first reaction layer 20 having a thickness of about 1 µm and composed of an intermetallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No Ag was observed in the reaction layers 20 and 21 of the bonding interface, and a eutectic structure of Sn and η phase (Ag₃Sn) and crystallization (reference numeral 30 in FIG. 4) of local phase (Ag₃Sn) were observed within the bonding composition 12.

The shear test result shows that the bonded portion has shear strength of 32 MPa. And, the shear fracture has occurred within the bonding composition 12.

Thus, it was found that both Ge and Si are diffused to the bonding interfaces between the bonded members 10 and 11 and the bonding composition 12, and the first reaction layer 20 made of the intermetallic compound of Sn(Fe, Ge, Si) is formed on the entire surface of the bonded member 10. Thus, it was found that Fe constituting the bonded members 10 and 11 is prevented from dispersing toward the bonding composition 12, and the second reaction layer 21 which is stacked on the first reaction layer 20 is suppressed from growing.

### (Example 4)

The shear specimen used in Example 4 has the same structure as that of the shear specimen used in Example 1 except that Sn-3wt%Ag-0.5wt%Cu-0.05wt%Ge-0.05wt%Si was used as the bonding composition 12, and the bonded members 10 and 11 were made of Fe-42wt%Ni.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of crystallization indicated by 30 in the drawing are different.

As an analyzed result, the bonded member 10, the first reaction layer 20 having a thickness of about 1 µm and composed of an intermetallic compound of Sn(Fe, Ni, Ge, Si), and the second reaction layer 21 having a thickness of 7 µm and composed of an intermetallic compound of Sn(Fe, Ni) were observed in a state stacked in this order as shown in FIG. 4. The first reaction layer 20 was formed to cover the entire surface of the bonded member 10. No Ag or Cu was observed in the reaction layers 20 and 21 of the bonding interface, but a eutectic structure of Sn and η phase (Ag₃Sn), a eutectic structure of Sn and η phase (Cu₆Sn₅), and crystallization (reference numeral 30 in FIG. 4) of local η phase (Ag₃Sn) and local phase (Cu₆Sn₅) were observed in the bonding composition 12.

The shear test result shows that the bonded portion has shear strength of 38 MPa. And, the shear fracture has occurred in the bonding composition 12.

### (Example 5)

The shear specimen used in Example 5 has the same structure as that of the shear specimen used in Example 1 except that Sn-3wt%Ag-0.5wt%Cu-1.0wt%Bi-0.05wt%Ge-0.05wt%Si was used as the bonding composition 12, and the bonded members 10 and 11 were made of Japanese Industrial Standard (JIS) S45C steel material.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1, Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of crystallization indicated by 30 in the drawing are different

As an analyzed result, the bonded member 10, the first reaction layer 20 having a thickness of about 1 µm and composed of an intermerallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No Ag, Cu, or Bi was observed in the reaction layers 20, 21 of the bonding interface, and a eutectic structure of Sn and η phase (Ag₃Sn), a eutectic structure of Sn and η phase (Cu₆Sn₅), and crystallization (reference numeral 30 in FIG. 4) of local η phase (Ag₃Sn), local η phase (Cu₆Sn₅) and Bi crystallized phase were observed in the bonding composition 12.

The shear test result shows that the bonded portion has shear strength of 35 MPa. And, the shear fracture has occurred in the bonding composition 12.

### (Example 6)

The shear specimen used in Example 6 has the same structure as that of the shear specimen used in Example 1 except that Sn-3wt%/Ag-2.0wt%Bi-4.0wt%In-0.05wt%Ge-0.05wt%Si was used as the bonding composition 12, and the bonded members 10 and 11 were made of Japanese Industrial Standard (JIS) S45C steel material.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of crystallization indicated by 30 in the drawing are different.

As an analyzed result, the bonded member 10, the first reaction layer 20 having a thickness of about 1 µm and composed of an intermetallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No Ag, Bi, or In was observed in the reaction layers 20 and 21 of the bonding interface, but a eutectic structure of Sn and η phase (Ag₃Sn), local η phrase (Ag₃Sn), and crystallization (reference numeral 30 in FIG. 4) of Bi and In crystallized phase were observed in the bonding composition 12.

The shear test result shows that the bonded portion has shear strength of 32 MPa And, the shear fracture has occurred in the bonding composition 12.

### (Example 7)

The shear specimen used in Example 7 has the same structure as that of the shear specimen used in Example 1 except that Sn-8wt%Zn-0.05wt%Ge-0.05wt%Si was used as the bonding composition 12, and the bonded members 10 and 11 were made of Fe-42wt%Ni.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FUG. 4. But, the positions of peaks and troughs configuring the irregular shape of the second reaction layer 21 and the distribution of a eutectic structure indicated by 30 in the drawing are different.

As an analyzed result the bonded member 10, the first reaction layer 20 having a thickness of about 1 µm and composed of an intermetallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No Zn was observed in the reaction layers 20 and 21 of the bonding interface, but the eutectic structure 30 of Sn and Zn was observed in the bonding composition 12.

The shear test result shows that the bonded portion has shear strength of 24 MPa. And, the shear fracture has occurred in the bonding composition 12.

It was also found that when a minute amount of Ge and Si is contained in a bonding composition composed of Sn-8 wr%Zn having a melting point of 199°C, the melting point is slightly increased to 202°C, and the bonding composition provided with both excellent bonding strength and low melting point can be obtained.

### (Example 8)

The shear specimen used in Example 8 has the same structure as that of the shear specimen used in Example 1 except that Sn-57wt%Bi-0.05wt%Ge-0.05wt%Si was used as the bonding composition 12, and the bonded members 10 and 11 were made of an iron based material (SS400).

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of a eutectic structure indicated by 30 in the drawing are different.

As an analyzed result, the bonded member 10, the first reaction layer 20 having a thickness of about 1 µm and composed of an intermetallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No Bi was observed in the reaction layers 20 and 21 of the bonding interface, but the eutectic structure 30 of Sn and Bi was observed in the bonding composition 12.

The shear test result shows that the bonded portion has shear strength of 33 MPa. And, the shear fracture has occurred in the bonding composition 12.

### (Example 9)

The shear specimen used in Example 9 has the same structure as that of the shear specimen used in Example 1 except that Sn-5wt%Sb-0.05wt%Ge-0.05wt%Si was used as the bonding composition 12, and the bonded members 10 and 11 were made of an iron based material (SS400).

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of crystallization indicated by 30 in the drawing are different.

As an analyzed result, the bonded member 10, the first reaction layer 20 having a thickness of about 1 µm and composed of an intermetallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No Sb was observed in the reaction layers 20 and 21 of the bonding interface, and local crystallization of a SnSb intermetallic compound 30 was observed in the bonding composition 12.

The shear test result shows that the bonded portion has shear strength of 27 MPa And, the shear fracture has occurred in the bonding composition 12.

### (Example 10)

The shear specimen used in Example 10 has the same structure as that of the shear specimen used in Example 1 except that Sn-6wt%Ih-0.05wt%Ge-0.05wt%Si was used as the bonding composition 12, and the bonded members 10 and 11 were made of an iron based material (SS400).

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of a eutectic structure indicated by 30 in the drawing are different.

As an analyzed result, the bonded member 10, the first reaction layer 20 having a thickness of about 1 µm and composed of an intermetallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No In was observed in the reaction layers 20 and 21 of the bonding interface, but the eutectic structure 30 of Sn and In was observed in the bonding composition 12.

The shear test result shows that the bonded portion has shear strength of 25 MPa. And, the shear fracture has occurred in the bonding composition 12.

### (Example 11)

The shear specimen used in Example 11 has the same structure as that of the shear specimen used in Example 1 except that Sn-37wt%Pb-0.05wt%/Ge-0.05wt%Si was used as the bonding composition 12, and the bonded members 10 and 11 were made of an iron based material (SS400).

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 4 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of the eutectic structure indicated by 30 in the drawing are different

As an analyzed result, the bonded member 10, the first reaction layer 20 having a thickness of about 1 µm and composed of an intermetallic compound of Sn(Fe, Ge, Si), and the second reaction layer 21 having a thickness of 5 to 7 µm and composed of an intermetallic compound of Sn(Fe) were observed in a state stacked in this order as shown in FIG. 4. The first reaction layer 20 was formed to cover the entire surface of the bonded member 10. No Pb was observed in the reaction layers 20 and 21 of the bonding interface, but the eutectic structure 30 of Sn and Pb was observed in the bonding composition 12.

The shear test result shows that the bonded portion has shear strength of 25 MPa. And, the shear fracture has occurred in the bonding composition 12.

### (Example 12)

The shear specimen used in Example 12 has the same structure as that of the shear specimen used in Example 1 except that Sn-0.7wt%Cu-0.1wt%Co-0.05wt%Ge-0.05wt%Si was used as the bonding composition 12.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found from the analysis results in Example 3 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of crystallization indicated by 30 in the drawing are different.

As an analyzed result, the bonded member 10, the first reaction layer 20 having a thickness of about 1 µm and composed of an intermetallic compound of Sn(Fe, Cu, Co, Ge, Si), and the second reaction layer 21 having a thickness of 3 to 5 µm and composed of an intermetallic compound of Sn(Fe, Cu, Co) were observed in a state stacked in this order as shown in FIG. 4. The first reaction layer 20 was formed to cover the entire surface of the bonded member 10. And a eutectic structure of η phase ((Cu, Co)₆Sn₅) containing Sn and η phase (Cu₆Sn₅) and Co, and crystallization (reference numeral 30 in FIG. 4) of η phase ((Cu, Co)₆Sn₅) containing local phase (Cu₆Sn₅) and Co were observed in the bonding composition 12.

The shear test result shows that the bonded portion has shear strength of 35 MPa. And, the shear fracture has occurred in the bonding composition 12.

It was found that even when a predetermined amount of Co is contained, all of Co, Cu, Ge and Si are dispersed into the bonding interfaces between the bonded members 10 and 11 and the bonding composition 12, and the first reaction layer 20 made of the intermetallic compound of Sn(Fe, Co, Cu, Ge, Si) is formed on the entire surface of the bonded member 10. Thus, it was found that Fe constituting the bonded members 10 and 11 is prevented from dispersing toward the bonding composition 12, and the second reaction layer 21 which is stacked on the first reaction layer 20 is suppressed from growing.

### (Example 13)

The shear specimen used in Example 13 has the same structure as that of the shear specimen used in Example 1 except that Srk-0.7wt%Cu-0.1wt%Ti-0.05wt%Ge-0.05wt%Si was used as the bonding composition 12.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1. Since it was found form the analysis results of Example 3 that the reaction layers have the similar formed structures as those of the reaction layers of Example 2 shown in FIG. 4, the following description is made with reference to FIG. 4. Here, the similar formed structures of the reaction layers as those of the reaction layers of Example 2 mean that the second reaction layer 21 is stacked on the first reaction layer 20, and they also have substantially the same thickness as that shown in FIG. 4. But, the positions of peaks and troughs configuring the irregular shape of the second reaction layer 21 and the distribution of crystallization indicated by 30 in the drawing are different.

As an analyzed result, the bonded member 10, the first reaction layer 20 having a thickness of about 1 µm and composed of an intermetallic compound of Sn(Fe, Ti, Ge, Si), and the second reaction layer 21 having a thickness of 3 to 5 µm and composed of an intermetallic compound of Sn(Fe) were observed in a state stacked in this order as shown in FIG. 4. The first reaction layer 20 was formed to cover the entire surface of the bonded member 10. And, a eutectic structure of η phase ((Cu Co)₆Sn₂) containing Sn and η phase (Cu₆Sn₅) and Co, and crystallization (reference numeral 30 in FIG. 4) of η phase ((Cu, Co)₆Sn₅) containing local phase (Cu₆Sn₅) and Co were observed in the bonding composition 12.

The shear test result shows that the bonded portion has shear strength of 33 MPa And, the shear fracture has occurred in the bonding composition 12.

It was found that even when a predetermined amount of Ti is contained, all of Ti, Ge and Si are dispersed into the bonding interfaces between the bonded member 10 and 11 and the bonding composition 12, and the first reaction layer 20 made of the intermetallic compound of Sn(Fe, Ti, Ge, Si) is formed on the entire surface of the bonded member 10. Thus, it was found that Fe constituting the bonded members 10 and 11 is prevented from dispersing toward the bonding composition 12, and the second reaction layer 21 which is stacked on the first reaction layer 20 is suppressed from growing.

### (Comparative Example 2)

The shear specimen used in Comparative Example 2 has the same structure as that of the shear specimen used in Example 1 except that Su-0.7wt%Cu was used as the bonding composition 12.

Similar to Example 1, the bonding interfaces between the bonded members 10 and 11 and the bonding composition 12 of the shear specimen were observed and analyzed by the scanning electron microscope and the X-ray microanalyzer. And, the Shear specimen was subjected to the shear test under the same test conditions as in Example 1.

FIG. 5 is a diagram schematically showing the results of the observation and analysis of the bonding interfaces between the bonded members 10 and 11 and the bonding composition 12 of the shear specimen. FIG. 5 shows the bonding interface on the side of the bonded member 10, but the bonding interface on the side of the bonded member 11 had the similar result as that of the bonding interface on the side of the bonded member 10.

As shown in FIG. 5, a reaction layer 35 having a thickness of 10 to 15 µm and composed of an intermetallic compound of Sn(Fe) was observed on the bonding interface between the bonded member 10 and the bonding composition 12. No Cu was observed in the reaction layer 35, and a eutectic structure of Sn and η phase (Cu₆Sn₅) and crystallization (reference numeral 30 in FIG. 5) of local η phase (Cu₆Sn₅) were observed in the bonding composition 12.

The shear test result shows that the bonded portion has shear strength of 25 MPa. And, the shear fracture has occurred along the interface between the bonding composition 12 and the reaction layer 35, and the shear fracture has occurred locally in the reaction layer 35.

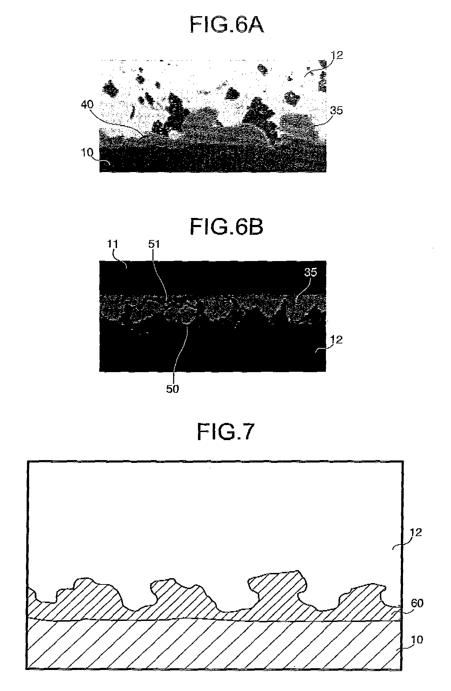

FIG. 6A is a diagram showing a sectional view of a shear specimen having caused brittle fracture on the side of the bonded member 10, and FIG. 6B is a diagram showing a sectional view of a shear specimen having caused brittle fracture on the side of the bonded member 11. FIG. 6A and FIG. 6B are images of the sectional views observed through a scanning electron microscope.

As shown in FIG. 6A, with the progresses of shear deformation, a void was formed around the coarse intermetallic compound which formed the reaction layer 35 on the bonding interface between the bonded member 10 and the bonding composition 12 and gradually grown as an extinction site of transposition, the consistency of the interface between the intermetallic compound and the bonding composition 12 was lost, and a crack 40 was generated in the interface between the reaction layer 35 and the bonding composition 12 and in the reaction layer 35. As shown in FIG. 6B, there were observed shear fracture 50 along the interface between the reaction layer 35 and the bonding composition 12 and shear fracture 51 in the reaction layer 35.

### (Comparative Example 3)

The shear specimen used in Comparative Example 3 has the same structure as that of the shear specimen used in Example 1 except that Sn-8wt%Zn was used as the bonding composition 12, and the bonded members 10 and 11 were made of Pe-42wt%Ni.

Similar to Example 1, the bonding interfaces between the bonded members 10 and 11 and the bonding composition 12 of the shear specimen were observed and analyzed by the scanning electron microscope and the X-ray microanalyzer. And, the shear specimen was subjected to the shear test under the same test conditions as in Example 1.

FIG. 7 is a diagram schematically showing the results of the observation and analysis of they bonding interfaces between the bonded members 10 and 11 and the bonding composition 12 of the shear specimen. FIG. 7 shows the bonding interface on the side of the bonded member 10, and the bonding interface on the side of the bonded member 11 had the similar result as that of the bonding interface on the side of the bonded member 10.

As shown in FIG. 7, a reaction layer 60 having a thickness of 15 to 20 µm and made of an intermetallic compound of Sn(Fe, Ni) was observed on the bonding interface between the bonded member 10 and the bonding composition 12.

The shear test result shows that the bonded portion has shear strength of 22 MPa. And, the shear fracture has occurred along the interface between the bonding composition 12 and the reaction layer 60.

### (Review of results of Example 1 to Example 13 and Comparative Example 2 to Comparative Example 3)

When the bonding composition made of Sn-Cu containing Ge and Si is used as in Example 1 to Example 13, both Ge and Si are dispersed to the bonding interfaces between the bonded members 10 and 11 and the bonding composition 12, and the first reaction layer 20 made of the intermetallic compound of Sn(Fe, Ge, Si) was formed on the entire surface of the bonded member 10. Thus, it was found that Fe forming the bonded members 10 and 11 is prevented from dispersing to the bonding composition 12, and the second reaction layer 21 which is stacked on the first reaction layer 20 is suppressed from growing.

It was also made apparent that Ni can be prevented from dispersing to the bonding composition 12 even when there is used the bonded members 10 and 11 containing Ni which is known as having a fast diffusion rate to the Sn based bonding composition, for example, Fe-Ni based material, Ni based material, or another metallic material plated with Ni, such as a Cu based material, an Al based material or a Mg based material.

### Industrial Applicability

By the bonding composition according to the embodiment of the present invention, when a predetermined amount of Ge and Si is contained into Sn or a Sn alloy, both Ge and Si are dispersed on the bonding interfaces between the bonded members and the bonding composition, and a reaction layer composed of the constituent elements of Sn and the bonded members or the constituent elements of the plated coat of the Ni-plated bonded members and the intermetallic compound of Ge and Si can be formed on the entire surface of the bonded members. Thus, the diffusion of the constituent elements composing the bonded members or the constituent elements of the plated coat of the Ni-plated bonded members toward the bonding composition can be prevented, the other reaction layer which is stacked on the above reaction layer can be suppressed from growing, and the bonding strength can be improved. The bonding composition according to the embodiment of the present invention can be used effectively as a bonding member for mechanical and electrical connection of plural component parts, which are used under severe environments involving a heat cycle, a mechanical impact, mechanical vibrations, etc., of, for example, a substrate for power control computers, home electric appliances, personal computers and others.

## Claims

1. A bonding composition, comprising,
0.01 to 1 wt% of Ge, 0.01 to 1 wt% of Si, and a balance of Sn or a Sn alloy.

2. The bonding composition according to claim 1,
wherein 0.01 to 1 wt% of Co is further contained.

3. The bonding composition according to claim 1,
wherein 0.01 to 1 wt% of Ti is further contained.

4. The bonding composition according to claim 2,
wherein 0.01 to 1 wt% of Ti is further contained.
